# EUROPEAN PATENT APPLICATION

(11) **EP 4 746 342 A1**
(43) Date of publication of application: **20.05.2026**
(21) Application number: 24306922.6
(22) Date of filing: 18.11.2024
(51) Int. Cl.: H04L 9/32

(54) **METHOD FOR ISSUING A VC FOR A HOLDER BOUND TO A THIRD PARTY**

(71) Applicant: THALES DIS FRANCE SAS, 92190 Meudon (FR)
(72) Inventor: BRUNA, Hugo, 84100 ORANGE (FR); BOTKA, Michal, 14000 PRAHA NUSLE (CZ)
(74) Representative: Quintero Romero, Manuel

(57) **Abstract**

The invention relates to a method for issuing a verifiable credential for a holder bound to a third party, wherein the method comprises the following steps:
- the holder requests the issuer to issue the verifiable credential comprising at least one claim about the holder,
- the issuer receives a holder identifier (DID_{HOLDER_DOC}), and a third party identifier (DID_{THlRD_PARTY}), and binds the at least one claim about the holder to the third party identifier, and
- the issuer issues the verifiable credential to the holder.

## Description

### TECHNICAL FIELD

The present invention relates to issuance of verifiable credentials and, more particularly, to verifiable credentials bound to a third party, instead of the claims' holder.

Advantageously, the invention is privacy-compliant and prevents holder's activities from being traceable during the subsequent presentations.

### BACKGROUND OF THE INVENTION

Credentials are typically used to assert that a holder or subject has certain claims e.g., is licensed and capable of operating a certain motor vehicle, has attained a level of university education, or that has a government-issued passport enabling the holder to travel between countries. A Verifiable Credential (VC), as described in the specification W3C's Verifiable Credential Data Model v2.0, included herein by reference, has the same benefits than the traditional physical ones and expands to online or web-based scenarios e.g., where machine-readable personal information data needs to be provided on the web.

In a classical W3C's Verifiable Credentials ecosystem, an "issuer" asserts certain claims about the subject or "holder", thus creating a verifiable credential from these claims, and transmits the verifiable credential to the holder. The holder then registers certain identifiers (e.g., Decentralized Identifiers, DID) and schemas to a "Verifiable Data Registry" that maintains them. When the holder wishes to selectively disclose his/her credentials to a "verifier", it generates a Verifiable Presentation (VP, similar in schema to a Verifiable Credential) that the verifier can validate using the verifiable data registry. Verifiability of a credential does not imply the truth of claims encoded therein. Instead, upon establishing the authenticity and currency of a VC or VP, a verifier validates the included claims using its own business rules before relying on them. Such reliance only occurs after evaluating e.g., the issuer, the proof, the subject, and/or the claims against one or more verifier policies.

Since the beginning of the digital IDs in general, and VCs in particular, the balance of privacy-preserving restrictions and easy-to-use promotion has been carefully considered in view of e.g., multi-source and data persistent features. Nevertheless, todays' state of the art techno still has room for improvement, especially regarding traceability issues.

For instance, each time a user presents his/her VC or VP to a verifier, traditionally comprising public key(s), i.e., publicly known static value(s), his/her activity can be tracked down. As a matter of fact, different verifiers may collude with each other and, then, they all can correlate the activities of a certain user if he/she always share with them the same static value(s).

As an example, a user wishing to buy alcohol online should be requested by the website to prove his age beforehand. The user can selectively disclose his/her credential e.g., only the age/birthday/over18 = true. During the presentation process, the user signs the verifiable credential with the key(s) linked to his/her wallet which is in turn already linked to a credential and has been used multiple times. If the alcohol website is conducting some data collection and even data sharing with other verifiers, holder's behaviour can be traced and hence be subject to e.g., user profiling or even identity/data theft.

Today, the most plausible and effective way for a holder to avoid being traced by verifiers, is to contact the issuer again and request re-issuing the credential but bound to a new public key. Nevertheless, this solution is not optimal since re-issuing credential(s) is costly and, more importantly, the issuer can also track credential's usage.

Still, an emerging solution to allow presenting credentials without being traced is to use BBS Blind Signature (or more recent BBS+). However, the binding of the holder (e.g., public) key between the VC and the VP is unavoidably lost. That is, the verifier cannot know if the public key of the VP is bound to the correct user/holder.

Thus, there is a need in the VC ecosystem for a privacy-compliant solution that prevents holder's activities from being traceable by both the issuer and verifiers.

### SUMMARY OF THE INVENTION

The present invention provides a solution for the aforementioned problems by a method for issuing a verifiable credential for a holder bound to a third party according to claim 1, a method for generating a verifiable presentation according to claim 6, a method for presenting the verifiable presentation according to claim 11, and a system for issuing a verifiable credential according to claim 13. In dependent claims, preferred embodiments of the invention are defined.

In a first aspect, the invention provides a method for issuing a verifiable credential for a holder bound to a third party. The method comprises the following steps:
- the holder requests the issuer to issue the verifiable credential comprising at least one claim about the holder,
- the issuer receives a holder identifier (DID_{HOLDER_DOC}), and a third party identifier (DID_{THIRD_PARTY}), and binds the at least one claim about the holder to the third party identifier, and
- the issuer issues the verifiable credential to the holder.

Throughout this description, the identifier(s) (such as the holder identifier or the third party identifier) are any type of data structure uniquely associated to specific subjects in a common ecosystem. Then, it can be understood as identifiers in a federated infrastructure (e.g., public keys, certificates) or in a decentralized infrastructure (e.g., Uniform Resource Identifiers, URls; globally unique Uniform Resource Locator, URL; or decentralized identifiers, DIDs, as per W3C's Decentralized Identifiers (DIDs) v1.0 Core architecture, data model, and representations, 19 July 2022), or both (e.g., public keys contained in DID documents or private keys used to sign DIDs). Preferably, the identifiers of the invention are DID documents containing public keys belonging to the respective subjects.

In short, the present invention re-uses Self-Sovereign Identity (SSI) wallets and VCs but further brings a new entity: the (trusted) third party which acts as a Public Key Infrastructure (PKI) authority and is, preferably, known and trusted by all the entities involved (issuer, holder, verifiers). The claim(s) about the holder are bound to the third party (i.e., its identifier with its public key) instead of the holder so that, when the holder wishes to present the VC or VP to a verifier, the third party firsts authenticate the holder and perform the appropriate binding of the VP to the HOLDER.

In a particular embodiment, the method comprises the following steps:
- the issuer receives from holder the holder identifier (DID_{HOLDER_DOC}), generates a challenge (CHALLENGE_{ISSUER_DOC}), and signs a payload comprising the holder identifier and the challenge; then, the issuer sends the signed payload back to the holder,
- the holder also signs the signed payload and sends the double signed payload to the third party,

- the third party extracts and stores the holder identifier (DID_{HOLDER_DOC}) and the challenge from the double signed payload, generates the third party identifier (DID_{THIRD_PARTY}), and signs a second payload with the third party identifier and the challenge, and
- the issuer receives the signed second payload, extracts the third party identifier, and binds the at least one claim about the holder to the third party identifier; then the issuer issues the verifiable credential to the holder.

At the creation of any VC, the issuer eventually requests the holder to prove he/she owns a public key to bind it later to the VC. The bind creates a link between the issued VC and the public key of the holder. To prove that the person who present its VC document is the same that the one linked in the VC, the holder must use the same public key linked in the VC document to sign the VP. Otherwise, the verifier may deduce that another person is currently presenting the document and according to its policy, it may reject to provide the service. According to this invention, the holder is concerned about his/her privacy, and hence decide to register to a (known and trusted) third party that has to be used for multiple other users. Unlike conventional VCs, the user requests to bind his/her future VC to this third party which, in return, binds its identifier (i.e., DID) to the holder's VC. Finally, the issues the VC to the holder.

Then, when the holder intends to present this VC to a verifier (or a VP derived therefrom), he/she generates first a new (signing) key pair for presentation and requests the third party to bind this new signing key pair to the third party identifier (i.e., its DID). Since the third party had stored the holder identifier, it can verify that the holder has the right to bind his new key. To create a binding, the third party collects the new signing key or its identifier (i.e., its DID) and sign it with the same key pair used to bind (link) the VC to the third party. Once the binding is done, the holder wraps the VC into VP, adds the binding from the third party in the VP and sign the VP with the new generated key. As it will be explained later on, to be sure that the holder is unlikable, he/she generates and binds a new key pair at each presentation.

Consequently, the probability to trace the holder has been greatly reduced, or even eliminated, because the holder changes at every presentation his key pair with his identifier and the third party is indeed bound to multiple VCs for different holders.

Unlike classical just-in-time issuance techniques, the holder of the present invention does not need to re-contact the issuer to issue a new document after each use. Thus, reducing costs, processing time and network bandwidth size. Further, issuer cannot count or trace the presentation of the claims or VCs.

The following embodiments aim at mitigating some attacks and spoofing possibilities with this invention.

In a particular embodiment, the issuer generates a signature of the verifiable credential (VC_SIGNATURE) and further signs this signature and the challenge (CHALLENGE_{ISSUER_DOC}) thus creating a link between both. This is regarding a risk of binding a VC that is not supposed to be bound, as the holder is prevented from giving another VC, or a signature from another VC.

In a particular embodiment, the third party receives, directly or through the holder, the signed signature of the verifiable credential and the challenge by the issuer, and wherein the third party stores the signature of the verifiable credential at the position of the challenge.

Advantageously, since the third party does not store any claims, the risk that the fraudulent or compromised third party reuses the holder's VC is mitigated.

Since all the entities sign the payloads before sending them, i.e., implying holder knows the issuer and third party knows that the holder is known by the issuer, the risk to reuse a VC that e.g., has been stolen and the thief is registered to the same third party is mitigated. Namely, the signature by the issuer and the holder of the payload comprising the holder identifier and the challenge advantageously allows the third party knowing that the holder is indeed known by the issuer.

In a particular embodiment, when issuer requests the holder identifier to the holder, issuer also sends a previous challenge (CHALLENGE_{DID_HOLDER_DOC}), and in response the holder generates a private-public key pair (KEY_PAIR_{HOLDER_DOC}), and signs the previous challenge and the holder identifier with the private key (PRIV_KEY_{HOLDER_DOC}).

In a second aspect, the invention provides a method for generating a verifiable presentation from the verifiable credential issued according to any of the embodiments of the first inventive aspect. The method comprises the steps of:
- the holder generates a holder presentation identifier (DID_{HOLDER_PRESENTATION}),
- the third party receives the holder presentation identifier, retrieves and sends back to the holder a proof of the verifiable credential (VC_PROOF),
- the holder generates the verifiable presentation comprising the verifiable credential, the holder presentation identifier (DID_{HOLDER_PRESENTATION}) and the proof of the verifiable credential.

In a particular embodiment, the method further comprises the steps of:
- the holder generates a new private-public key pair (KEY_PAIR_{HOLDER_PRESENTATION}) for the ongoing presentation, and the holder presentation identifier (DID_{HOLDER_PRESENTATION}),

- the holder generates a third payload comprising at least the holder presentation identifier (DID_{HOLDER_PRESENTATION}), and signs this payload with both the new private key of the holder (PRIV_KEY_{HOLDER_PRESENTATION}) and the previous private key of the holder (PRIV_KEY_{HOLDER_DOC}),
- the third party verifies the holder signatures of the third payload and, if both are verified, retrieves the proof of the verifiable credential (VC_PROOF), and generates and signs a fourth payload comprising the holder presentation identifier (DID_{HOLDER_PRESENTATION}) and the proof of the verifiable credential, which is sent back to the holder,
- the holder generates and signs, using the new private key, the verifiable presentation comprising the verifiable credential, and the signed fourth payload comprising the holder presentation identifier (DID_{HOLDER_PRESENTATION}) and the proof of the verifiable credential.

In a particular embodiment, the third party requests the holder to derive the verifiable credential, or a part thereof, towards the proof of the verifiable credential using a pre-defined signature scheme, this proof being sent back to the third party within the signed third payload for verification. In a preferred embodiment, the signature scheme is BBS and the derivation uses a random provided by the third party.

Advantageously, the BBS Signature Scheme is a secure digital signature protocol proving knowledge of a signature while selectively disclosing any subset (i.e., holder's claims) of the signed messages. Concretely, holder is then able to create zero-knowledge, or proofs-of-knowledge of a signature, while selectively disclosing holder's claims of the VP.

In a particular embodiment, when the third party only stores the signature of the verifiable credential, the holder derives the signature of the verifiable credential towards the proof of the verifiable credential.

In a third aspect, the invention provides a method for presenting the verifiable presentation according to any of the embodiments of the second inventive aspect to a verifier. The method comprising the steps of:
- the holder sends the verifiable presentation to the verifier,
- the verifier verifies the binding between the holder and the third party in the verifiable presentation,
- the verifier further verifies, in the verifiable credential, the binding of the at least one claim about the holder to the third party identifier, and
- then, the verifier verifies that the at least one claim about the holder match with a policy.

In a particular embodiment, the method further comprises the steps of:
- the holder sends the signed verifiable presentation to the verifier,
- the verifier verifies the signature of the holder and the binding between the holder and the third party in the verifiable presentation by verifying the signature of the third party in the fourth payload,
- the verifier further verifies the signature of the issuer in the verifiable credential that was binding the at least one claim about the holder to the third party identifier,
- then, the verifier verifies that the at least one claim about the holder match with a policy.

In a fourth aspect, the invention provides a system for issuing a verifiable credential for a holder bound to a third party, wherein the system comprises:
- the holder being configured to
   o request the issuer to issue the verifiable credential comprising at least one claim about the holder,
   o sign a signed payload from the issuer and send the double signed payload to the third party,
- the issuer being configured to
   o receive from the holder a holder identifier (DID_{HOLDER_DOC}), generate a challenge (CHALLENGE_{ISSUER_DOC}), and sign the payload comprising a holder identifier and the challenge; then, send the signed payload back to the holder,
   o receive a signed second payload from the third party, extract a third party identifier, and bind the at least one claim about the holder to the third party identifier; then issue the verifiable credential to the holder,
- the third party being configured to
   o extract and store the holder identifier (DID_{HOLDER_DOC}) and the challenge from the double signed payload, generate a third party identifier (DID_{THIRD_PARTY}), and sign the second payload with the third party identifier and the challenge.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figs. 1a, 1b: illustrates a verifiable credential and a verifiable presentation according to embodiments of the invention;
- Fig. 2: illustrates a schematic flowchart to issue a verifiable credential for a holder bound to a third party according to an embodiment of the invention;
- Fig. 3: illustrates a schematic flowchart to generate a verifiable presentation from the verifiable credential according to an embodiment of the invention; and
- Fig. 4: illustrates a schematic flowchart to present the verifiable presentation according to an embodiment of the invention.

### DETAILED DESCRIPTION OF THE INVENTION

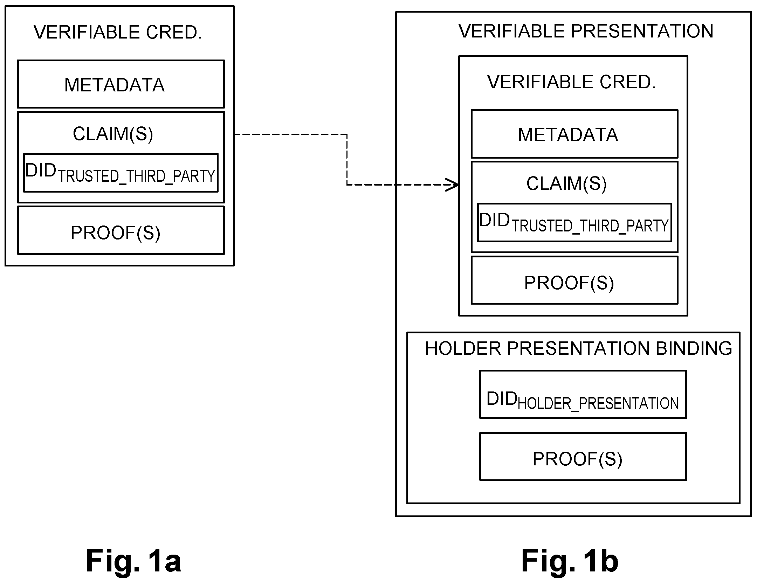

In **figure 1a****,** it is depicted a verifiable credential issued according to the present invention; while **figure 1b** depicts a verifiable presentation thereof.

As it can be seen in figure 1a, the resulting verifiable credential according to the invention still comprises three sections: Metadata, Claims, and proof(s). The main difference with conventional VCs is that the claims section also comprises the third party identifier (i.e., the holder's claims are bound to third party identifier).

Referring to figure 1b, it depicts the VC of figure 1a now wrapped into the verifiable presentation. Particularly, the VC wrapped into VP further contains a HOLDER PRESENTATION BINDING section, a kind of VC that contain the holder's identifier (DID_{HOLDER_PRESENTATION}) and that was issued by the third party to create a link between the third party and the holder's.

The HOLDER PRESENTATION BINDING section is signed with the same key of the third party referenced in the VC containing the holder claim(s). When a Verifiable Presentation contains a HOLDER PRESENTATION BINDING, the verifier first verifies, in addition to the conventional VCs verification flow, the link between the VC(s) presented and the HOLDER PRESENTATION BINDING, thanks to the third part identifier, present in the VC(s), and the proof of the HOLDER PRESENTATION BINDING, signed with the same third part key.

The verifier also verifies the link between the HOLDER PRESENTATION BINDING and the Verifiable Presentation, by validating that the Verifiable Presentation is signed with the same key of the holder, present in the HOLDER PRESENTATION BINDING.

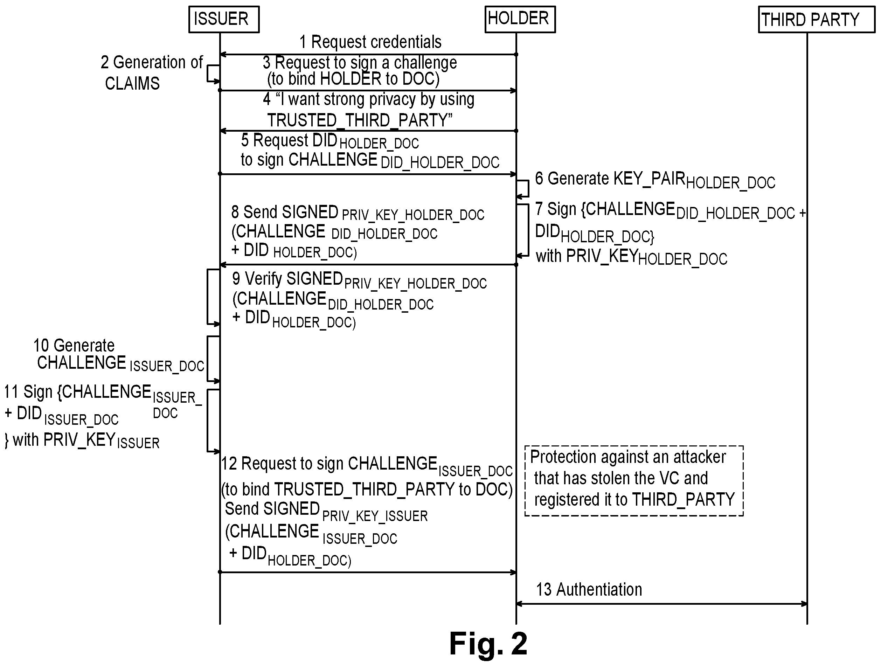

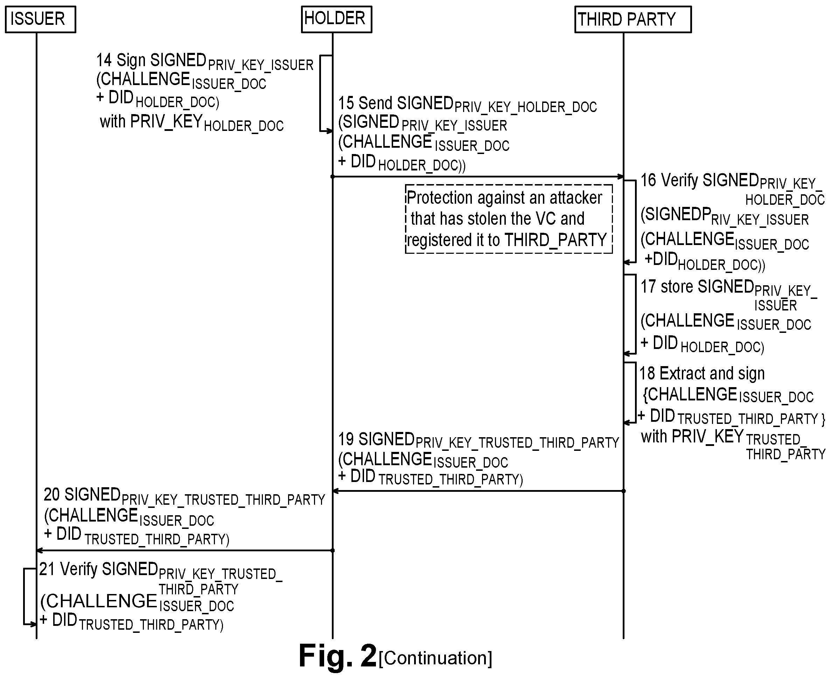

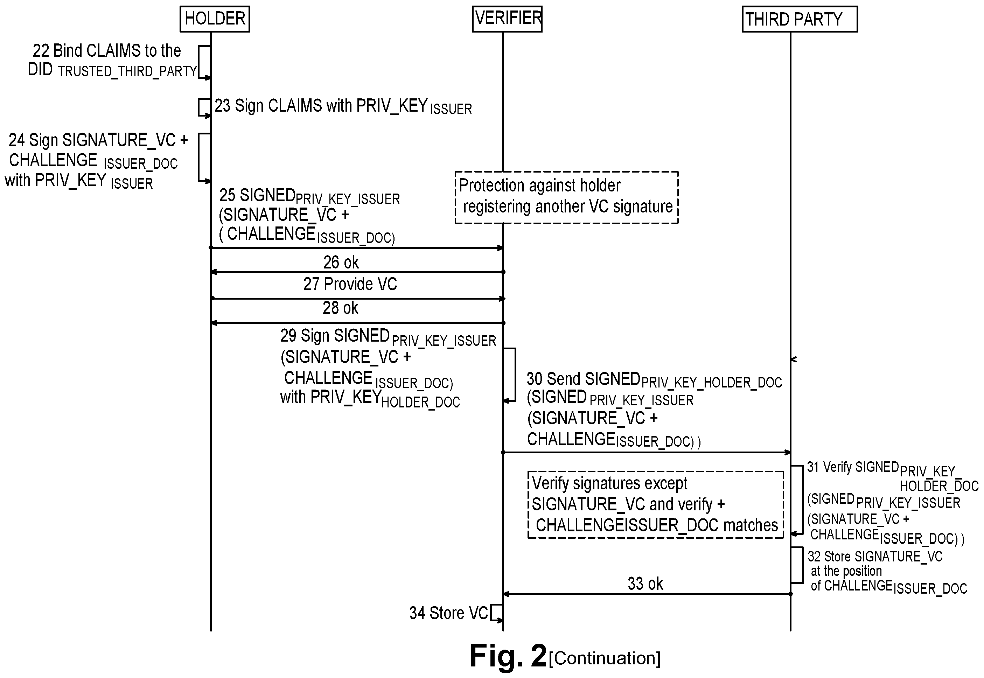

In **figure 2****,** depicting the issuance of a verifiable credential (VC) for a holder bound to a third party, the holder triggers the process by wishing to receive a credential asserted by the issuer. As known, the user might be the subject for which the claims contained in the VC are asserted and usually utilizes a wallet to communicate with other entities within the ecosystem and store or process any residing/incoming/outgoing data (e.g., messages, keys, certificates, DIDs). The third party can be any kind of broker committing not to reveal the holder's activity with another party. The skilled person understands that the user, holder, or claim's subject can be human or machine-type thus representing an item in either the real or virtual space.

Alike in a classical situation, the holder or user (e.g., through his/her wallet) contacts the issuer to receive such a credential (step 1). In response, the issuer generates the claims (step 2) and requests back to the holder his/her identifier to be bound to the VC (step 3).

The invention now deviates from the standard way in that the holder, which has privacy concerns, replies to/or lets the issuer know that the VC will be bound to a third party (step 4). This step is optional, or can be automatize as necessary depending on the context. The issuer then requests to sign both a challenge, named "previous challenge" in the claims (CHALLENGE_{PUB_KEY_HOLDER_DOC}) and the holder identifier (DID_{HOLDER_DOC}) (step 5). The goal here is to prevent someone who stole the VC and have the same third party to ask for a new binding. This process also proves to the third party that issues knows the holder. Then the holder optionally generates a new key pair (KEY_PAIRS_{HOLDER_DOC}) (step 6) that will be eventually reused to verify that the holder is indeed the owner of the VC during presentation. The holder also generates the corresponding holder identifier (DID_{HOLDER_DOC}) and signs CHALLENGE_{PUB_KEY_HOLDER_DOC} and the DID_{HOLDER_DOC} (step 7) and then send them back (step 8) to issuer.

The issuer verifies the signature of CHALLENGE_{PUB_KEY_HOLDER_DOC} and the DID_{HOLDER_DOC} (step 9). If the verification succeeds, the issuer extracts the DID_{HOLDER_DOC} from the previous response, generates a challenge (CHALLENGE_{ISSUER_DOC}) (step 10) and signs a payload comprising both DID_{HOLDER_DOC} and the CHALLENGE_{ISSUER_DOC} (step 11).

It is to be noted that the CHALLENGE_{ISSUER_DOC} will be reused later on at the submission of the VC_SIGNATURE to the third party to link the VC_SIGNATURE. Then, the ISSUER sends the signed DID_{HOLDER_DOC}, the CHALLENGE_{ISSUER_DOC} and request to sign a CHALLENGE_{ISSUER_DOC} with the binding key (step 12).

The holder then authenticates the third party (step 13) establishing a secure connection. The holder further signs the signed payload comprising DID_{HOLDER__DOC} and the CHALLENGE_{ISSUER_DOC} (step 14) and submits it to the third party (step 15). To be sure that the request is coming from the holder and the holder is known by the issuer, the third party verifies the holder and issuer signatures on the payload (step 16). Once all the signatures are successfully verified, the third party stores the DID_{HOLDER_DOC} and the CHALLENGE_{ISSUER_DOC} (step 17).

The third party generates (or retrieves) its third party identifier (DID_{TRUSTED_THIRD_PARTY}) and signs a second payload with the CHALLENGE_{ISSUER_DOC} and its DID_{TRUSTED_THIRD_PARTY} (step 18). The ISSUER sends the sends back this signed second payload to the holder (step 19), which forwards it to the issuer (step 20). *"**Figure 2**" continues in "**Figure 2* *[continuation]".*

The issuer verifies the signature of the third party in the second payload and the CHALLENGE_{ISSUER_DOC} (step 21), extracts the DID_{TRUSTED_THIRD_PARTY} and binds it to the holder's claims (step 22). Finally, as conventionally done, issuer wraps the claims to VC and signs the VC (step 23).

As an advantageous embodiment, the issuer also signs the signature of the VC (VC_SIGNATURE) and the CHALLENGE_{ISSUER_DOC} to create a link therebetween and hence prevent the holder from storing another VC_SIGNATURE. The issuer then sends the VC and the VC_SIGNATURE with the CHALLENGE_{ISSUER_DOC} to the holder (steps 25 to 28).

In a preferred embodiment, the holder also signs the signed VC_SIGNATURE and the CHALLENGE_{ISSUER_DOC} (step 29) and sends them to the third party (step 30). The third party verifies all the signatures, i.e., that the key used by the issuer is the same and the CHALLENGE_{ISSUER_DOC} already exists (step 31). Then, the third party stores the VC_SIGNATURE at the position of CHALLENGE_{ISSUER_DOC} (step 32) and notifies the holder (step 33). The holder stores the VC in his/her wallet (step 34).

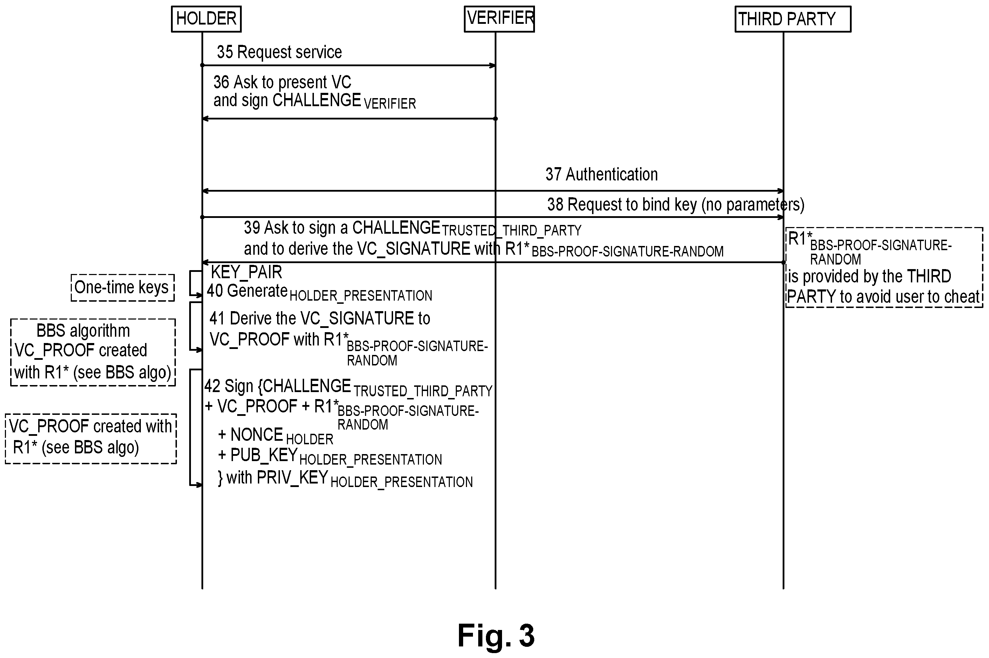

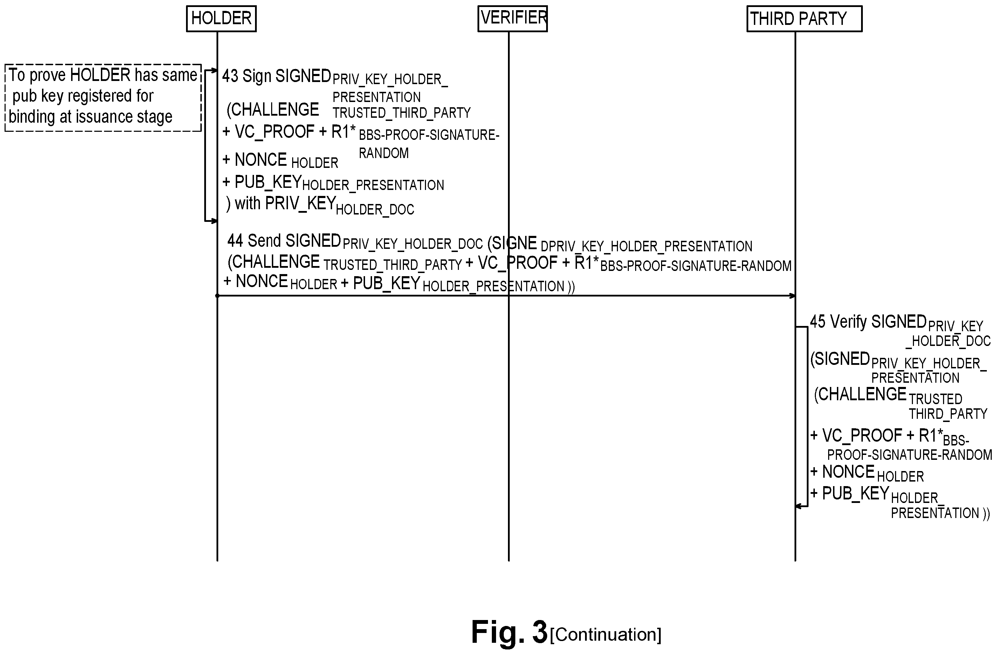

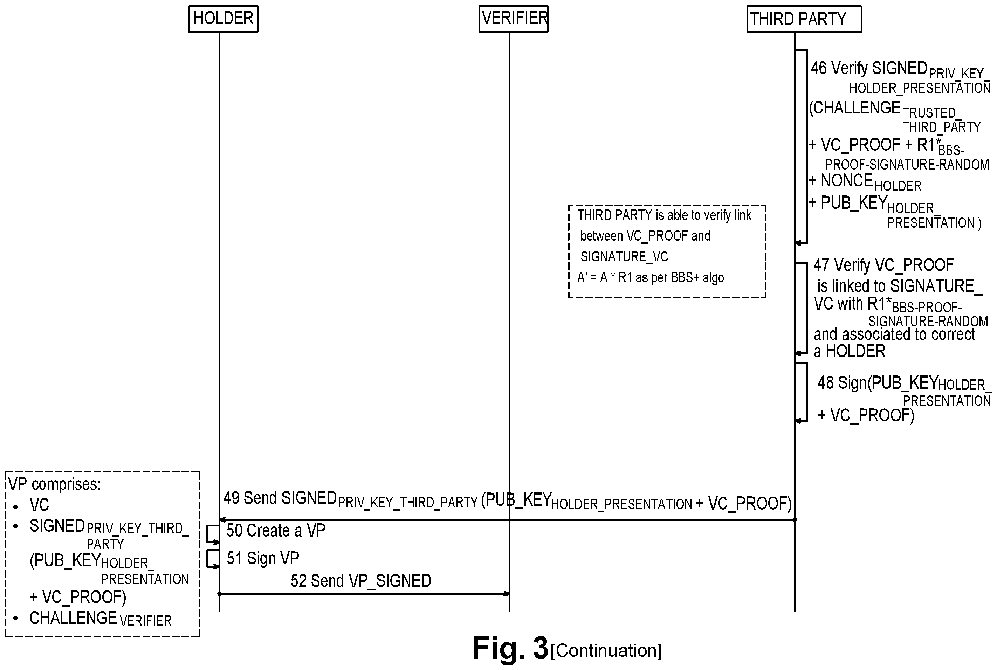

Referring now to **figure 3**, it depicts a schematic flowchart to generate a verifiable presentation from the verifiable credential. That is, the holder now wants to present his/her VC (e.g., issued according to figure 2) to a verifier.

As any conventional method, the holder starts requesting a service the verifier (step 35). The verifier requests the verification of a VC and a second challenge (CHALLENGE_{VERIFIER}) (step 36). The holder gets authenticated (again, or keeps same session) from the third party (step 37) and requests to bind a key for presentation (step 38).

The third party requests, in turn, the holder to sign a another challenge (CHALLENGE _{TRUSTED_THIRD_PARTY}) and to derive the VC_SIGNATURE with a random (BBS-PROOF-SIGNATURE-RANDOM). Preferably, the signature derivation is produced using a BBS signature scheme and, particularly, according to *draft-irtf-cfrg-bbs-signatures,* section 3.4.3 line 10, wherein the the random is r1* and has been chosen by the third party (step 39). The holder generates a new private-public key pair (KEY_PAIRS_{HOLDER_PRESENTATION}) and a holder presentation identifier (DID_{HOLDER_PRESENTATION}) (step 40)**.** The holder then derives the VC_SIGNATURE to VC_PROOF with the BBS-PROOF-SIGNATURE-RANDOM as instructed (step 41). The holder signs a third payload comprising the CHALLENGE _{TRUSTED_THIRD_PARTY}, VC_PROOF, BBS-PROOF-SIGNATURE-RANDOM, CHALLENGE_{VERIFIER}, DID_{HOLDER_PRESENTATION} with his PRIV_KEY_{HOLDER_PRESENTATION} (step 42). Furthermore, to verify that the holder had registered the VC to be presented now, the holder also signs the previous signed third payload with the previous private key used during issuance (PRIV_KEY_{HOLDER_DOC}) (step 43). Then, the holder provides to the third party the doubled signed third payload (step 44).

The third party verifies that the third payload has been signed with the previously registered PRIV_KEY_{HOLDER_DOC} to ascertain that the content to present has been already registered (step 45). Then, the third party verifies the second signature was produced with the PRIV_KEY_{HOLDER_PRESENTATION} (step 46). Then, the third party verifies that the VC_PROOF has been successfully generated with the provided BBS-PROOF-SIGNATURE-RANDOM and the VC_SIGNATURE (step 47). Finally, the third party signs a fourth payload comprising the VC_PROOF and the DID_{HOLDER_PRESENTATION} to create a binding between the third party and the holder (step 48) and return the signed fourth payload to the holder (step 49). The holder then creates the VP (step 50) and signs it with the PRIV_KEY_{HOLDER_PRESENTATION} (step 51). Once the VP is signed (VP_SIGNED), the holder can send it to the verifier (step 52).

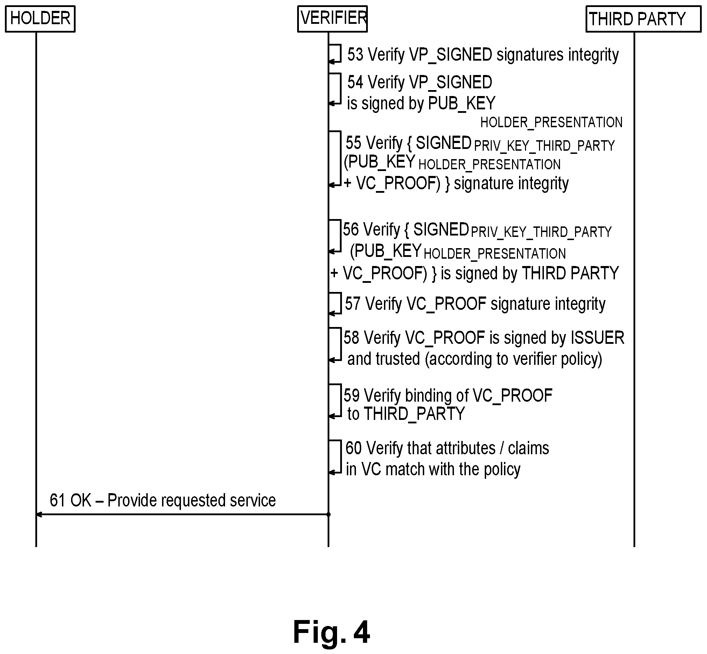

In **figure 4****,** it is depicted a schematic flowchart to present the verifiable presentation generated as per figure 3. As said, the holder creates and signs the VP (VP_SIGNED) and, then, sends it to the verifier (step 52 of figure 3).

Once received, the verifier verifies the integrity of the VP_SIGNED (step 53) and if the VP_SIGNED has been correctly signed with the PUB_KEY_{HOLDER_PRESENTATION} associated to the DID_{HOLDER_PRESENTATION} (step 54). The verifier further verifies the binding between the holder and third party by verifying the signature of the PUB_KEY_{HOLDER_PRESENTATION} and the VC_PROOF. If the signature can be verified with the PUB_KEY_{TRUSTED_THIRD_PARTY}, the integrity of the content signed is kept and the VC_PROOF is the same VC_PROOF of the VC contained inside the VP_SIGNED, meaning that the binding is valid (steps 55 and 56).

The verifier verifies the VC integrity thanks to the VC_PROOF and if the VC_PROOF can be verified with the PUB_KEY_{ISSUER} (steps 57 and 58). The verifier verifies the binding of the document to the third party (step 59). Finally, the verifier verifies that the holder's claims within the VP match with its policy (step 60).

Finally, if all the verifications are successful, the verifier grants or perform the requested service (step 61).

## Claims

1. A method for issuing a verifiable credential for a holder bound to a third party, wherein the method comprises the following steps:
- the holder requests the issuer to issue the verifiable credential comprising at least one claim about the holder,
- the issuer receives a holder identifier (DID_{HOLDER_DOC}), and a third party identifier (DID_{THIRD_PARTY}), and binds the at least one claim about the holder to the third party identifier, and
- the issuer issues the verifiable credential to the holder.

2. The method according to claim 1, further comprising the following steps:
- the issuer receives from holder the holder identifier (DID_{HOLDER_DOC}), generates a challenge (CHALLENGE_{ISSUER_DOC}), and signs a payload comprising the holder identifier and the challenge; then, the issuer sends the signed payload back to the holder,
- the holder also signs the signed payload and sends the double signed payload to the third party,
- the third party extracts and stores the holder identifier (DID_{HOLDER_DOC}) and the challenge from the double signed payload, generates the third party identifier (DID_{THIRD_PARTY}), and signs a second payload with the third party identifier and the challenge, and
- the issuer receives the signed second payload, extracts the third party identifier, and binds the at least one claim about the holder to the third party identifier; then the issuer issues the verifiable credential to the holder.

3. The method according to claim 2, wherein the issuer generates a signature of the verifiable credential (VC_SIGNATURE) and further signs this signature and the challenge (CHALLENGE_{ISSUER_DOC}) thus creating a link between both.

4. The method according to claim 3, wherein the third party receives, directly or through the holder, the signed signature of the verifiable credential and the challenge by the issuer, and wherein the third party stores the signature of the verifiable credential at the position of the challenge.

5. The method according to any of claims 1 to 4, wherein when issuer requests the holder identifier to the holder, issuer also sends a previous challenge (CHALLENGE_{DID_HOLDER_DOC}), and in response the holder generates a private-public key pair (KEY_PAIR_{HOLDER_DOC}), and signs the previous challenge and the holder identifier with the private key (PRIV_KEY_{HOLDER_DOC}).

6. A method for generating a verifiable presentation from the verifiable credential issued according to any of the claims 1 to 5, the method comprising the steps of:
- the holder generates a holder presentation identifier (DID_{HOLDER_PRESENTATION}),
- the third party receives the holder presentation identifier, retrieves and sends back to the holder a proof of the verifiable credential (VC_PROOF),
- the holder generates the verifiable presentation comprising the verifiable credential, the holder presentation identifier (DID_{HOLDER_PRESENTATION}) and the proof of the verifiable credential.

7. The method according to claim 6, when the verifiable credential was issued according to any of the claims 2 to 5, further comprising the steps of:
- the holder generates a new private-public key pair (KEY_PAIR_{HOLDER_PRESENTATION}) for the ongoing presentation, and the holder presentation identifier (DID_{HOLDER_PRESENTATION}),
- the holder generates a third payload comprising at least the holder presentation identifier (DID_{HOLDER_PRESENTATION}), and signs this payload with both the new private key of the holder (PRIV_KEY_{HOLDER_PRESENTATION}) and the previous private key of the holder (PRIV_KEY_{HOLDER_DOC}),
- the third party verifies the holder signatures of the third payload and, if both are verified, retrieves the proof of the verifiable credential (VC_PROOF), and generates and signs a fourth payload comprising the holder presentation identifier (DID_{HOLDER_PRESENTATION}) and the proof of the verifiable credential, which is sent back to the holder,
- the holder generates and signs, using the new private key, the verifiable presentation comprising the verifiable credential, and the signed fourth payload comprising the holder presentation identifier (DID_{HOLDER_PRESENTATION}) and the proof of the verifiable credential.

8. The method according to claim 7, wherein the third party requests the holder to derive the verifiable credential, or a part thereof, towards the proof of the verifiable credential using a pre-defined signature scheme, this proof being sent back to the third party within the signed third payload for verification.

9. The method according to claim 8, wherein the signature scheme is BBS and the derivation uses a random provided by the third party.

10. The method according to any of claims 8 or 9, when the verifiable credential was issued according to claim 4, wherein the holder derives the signature of the verifiable credential towards the proof of the verifiable credential.

11. A method for presenting the verifiable presentation according to any of the claims 6 to 10 to a verifier, the method comprising the steps of:
- the holder sends the verifiable presentation to the verifier,
- the verifier verifies the binding between the holder and the third party in the verifiable presentation,
- the verifier further verifies, in the verifiable credential, the binding of the at least one claim about the holder to the third party identifier, and
- then, the verifier verifies that the at least one claim about the holder match with a policy.

12. The method according to claim 11, when the verifiable presentation was according to any of the claims 7 to 10, further comprising the steps of:
- the holder sends the signed verifiable presentation to the verifier,
- the verifier verifies the signature of the holder and the binding between the holder and the third party in the verifiable presentation by verifying the signature of the third party in the fourth payload,
- the verifier further verifies the signature of the issuer in the verifiable credential that was binding the at least one claim about the holder to the third party identifier,
- then, the verifier verifies that the at least one claim about the holder match with a policy.

13. A system for issuing a verifiable credential for a holder bound to a third party, wherein the system comprises:
- the holder being configured to
o request the issuer to issue the verifiable credential comprising at least one claim about the holder,
o sign a signed payload from the issuer and send the double signed payload to the third party,
- the issuer being configured to
o receive from the holder a holder identifier (DID_{HOLDER_DOC}), generate a challenge (CHALLENGE_{ISSUER_DOC}), and sign the payload comprising a holder identifier and the challenge; then, send the signed payload back to the holder,
o receive a signed second payload from the third party, extract a third party identifier, and bind the at least one claim about the holder to the third party identifier; then issue the verifiable credential to the holder,
- the third party being configured to
o extract and store the holder identifier (DID_{HOLDER_DOC}) and the challenge from the double signed payload, generate a third party identifier (DID_{THIRD_PARTY}), and sign the second payload with the third party identifier and the challenge.
